# EUROPEAN PATENT SPECIFICATION

(11) **EP 3 369 323 B1**
(45) Date of publication and mention of the grant of the patent: **17.01.2024**
(21) Application number: 16859710.2
(22) Date of filing: 21.10.2016
(51) Int. Cl.: A23D 9/00, A23D 7/00, A23G 1/00, A23G 1/30

(54) **OILY FOOD**
ÖLIGES LEBENSMITTEL
ALIMENT HUILEUX

(30) Priority: 26.10.2015 JP 2015209515
(43) Date of publication of application: 05.09.2018
(73) Proprietor: The Nisshin OilliO Group, Ltd., Tokyo 104-8285 (JP)
(72) Inventor: OONISHI, Kiyomi, Yokosuka-shi Kanagawa 239-0832 (JP); HATANO, Yoshiyuki, Yokosuka-shi Kanagawa 239-0832 (JP); HASOME, Yoshimune, Yokosuka-shi Kanagawa 239-0832 (JP)
(74) Representative: Dennemeyer & Associates S.A.
(86) International application number: PCT/JP2016/081261
(87) International publication number: WO 2017/073480

(56) References cited:
- EP-A1- 1 886 988
- EP-A2- 0 196 780
- WO-A1-2006/121182
- JP-A- H0 475 593
- JP-A- H05 184 297
- JP-A- 2012 085 574

## Description

### TECHNICAL FIELD

The present invention relates to oil-based food exhibiting excellent blooming resistance and excellent graining resistance.

### BACKGROUND ART

Chocolate, fat cream, butter cream, margarine, spread, and the like are oil-based food containing fats and oils forming a continuous phase. The oil-based food with shape retention properties is largely maintained by the fats and oils. That is, the crystal structure of the fats and oils forming the continuous phase greatly influences the quality of the oil-based food.

For example, in tempered chocolate, fats and oils forming the chocolate contain cocoa butter or similar fat with a symmetrical triacylglycerol structure similar to that of cocoa butter. In manufacturing of the tempered chocolate, complicated temperature adjustment operation called "tempering" is performed. By tempering, the symmetrical triacylglycerol crystal forming the fats and oils is adjusted to a V-shape as a stable shape. With the V-shaped crystal of the fats and oils, chocolate exhibiting favorable mold releasability and favorable luster is provided.

However, tempering is no sufficiently performed. For this reason, an unstable fat-and-oil crystal might be present. Alternatively, when part of the chocolate is melted and solidified again due to a temperature change, the chocolate might be brought into a state (so-called "blooming") in which a whitish powdery coating appears on the chocolate. Blooming occurs because the crystal form of part of the fats and oils of the chocolate transitions from a V-shape to a VI-shape. Thus, it is important to maintain the crystal form of the fats and oils in the V-shape so as to keep the chocolate quality.

In order to avoid blooming of the chocolate, JP-A-62-6635 describes, for example, a fat blooming inhibitor containing mixed acid group triglyceride having, in a single molecule, at least one of each of saturated fatty acid residues with 20 to 24 carbons and unsaturated fatty acid residues with 16 to 22 carbons. The fat blooming inhibitor is effective to some extent for blooming caused due to melting and resolidification of part of the chocolate. However, the chocolate tends to be slightly softened with worse melting mouthfeel.

A plastic fat-and-oil composition such as margarine and spread is oil-based food containing a relatively-great amount of liquid oil. The plastic fat-and-oil composition has a fine fat-and-oil crystal right after manufacturing. However, due to a temperature change, the fat-and-oil crystal is gradually coarsened with a polymorphic change, leading to a coarse crystal (graining). Thus, it is important to maintain the fine crystal so as to keep the quality of the plastic fat-and-oil composition.

In order to avoid graining of the plastic fat-and-oil composition, JP-A-5-311190 describes, for example, a graining inhibitor (A2B) for fats and oils containing triglyceride having, as one constituent fatty acid, saturated fatty acid (B) with 12 or less carbons and having, as the remaining two fatty acids, saturated fatty acid (A) with 16 or more carbons. The graining inhibitor is effective to some extent for preventing occurrence of graining. However, the graining inhibitor slightly lacks the effect of maintaining the gloss of the plastic fat-and-oil composition. EP 1 886 988 A1 describes a fat blooming inhibitor composition containing triglycerides, characterized in that it comprises a mixed acid triglyceride having 15 to 70% by weight of saturated fatty acid residues with 20 to 24 carbon atoms and 20 to 60% by weight of unsaturated fatty acid residues with 16 to 22 carbon atoms.

In a composite bakery product as a combination of chocolate and a bakery product obtained by baking of dough containing a kneaded plastic fat-and-oil composition, fats and oils transfer between the bakery product and the chocolate. Thus, it has been known that a bakery product portion is whitened or blooming or graining occurs in a chocolate portion.

In order to avoid whitening of the bakery product portion and occurrence of blooming and graining of the chocolate portion in the composite bakery product, JP-A-5-192081 describes, for example, that a hard stock containing (H2M + HM2) as interesterified oil of fully-hydrogenated oil of palm kernel oil and fully-hydrogenated oil of palm is used as part of a coating and/or a filling (including baked confectionery). The composite bakery product using the hard stock exhibits the notable effect of reducing blooming and graining. However, onset of such an effect is unstable depending on the type and storage conditions of the composite bakery product.

### CITATION LIST

### PATENT LITERATURE

PATENT LITERATURE 1: JP-A-62-6635
PATENT LITERATURE 2: JP-A-5-311190
PATENT LITERATURE 3: JP-A-5-192081

### SUMMARY OF THE INVENTION

### PROBLEMS TO BE SOLVED BY THE INVENTION

Thus, development of oil-based food (and a composite bakery product including oil-based food) showing favorable gloss without occurrence of blooming or graining derived from fats and oils of the oil-based food has been expected.

An object of the present invention is to provide oil-based food (and a composite bakery product including oil-based food) showing favorable gloss with reduced occurrence of blooming and graining.

### SOLUTION TO THE PROBLEMS

The inventors of the present invention have conducted intensive study to solve the above-described problems. As a result, it has been found that the problems can be solved in such a manner that a certain percentage of L2M and LM2 as mixed acid group triacylglycerol having, as constituent fatty acids, medium chain fatty acid and long-chain fatty acid is contained in fats and oils of oil-based food. This has arrived at the present invention.

That is, the present invention provides as follows.
(1) Oil-based food containing: L2M and LM2 in fats and oils, wherein a mass ratio (L2M/LM2) of a content of the L2M to a content of the LM2 is 0.3 to 4.5.
   Note that L, M, the L2M, and the LM2 mean as follows:
   L: saturated fatty acid with 16 to 24 carbons;
   M: fatty acid with 6 to 10 carbons;
   L2M: triacylglycerol having two L molecules and a single M molecule bound to a single glycerol molecule; and
   LM2: triacylglycerol having a single L molecule and two M molecules bound to a single glycerol molecule.

Also the present invention provides: An inhibitor for blooming and graining of oil-based food, containing: L2M and LM2 of equal to or greater than 40 mass% in fats and oils, wherein a mass ratio (L2M/LM2) of a content of the L2M to a content of the LM2 is 0.3 to 4.5.
Note that L, M, the L2M, and the LM2 mean as follows:
L: saturated fatty acid with 16 to 24 carbons;
M: fatty acid with 6 to 10 carbons;
L2M: triacylglycerol having two L molecules and a single M molecule bound to a single glycerol molecule; and
LM2: triacylglycerol having a single L molecule and two M molecules bound to a single glycerol molecule.

### EFFECTS OF THE INVENTION

According to the present invention, the oil-based food (and the composite bakery product including the oil-based food) can be provided, which shows favorable gloss with favorable flavor and reduced occurrence of blooming and graining. According to the present invention, the above-described oil-based food (and the composite bakery product including the oil-based food) can be provided, which contains the palm-based fats and oils and contains substantially no trans-fatty acid.

### DESCRIPTION OF THE EMBODIMENTS

Hereinafter, oil-based food of the present invention will be sequentially described.

The oil-based food of the present invention is food containing fats and oils forming a continuous phase. Specific examples of such food include chocolate, fat cream, butter cream, spread, and the like. The fats and oils in the oil-based food of the present invention contain L2M and LM2. Hereinafter, L, M, L2M, and LM2 mean as follows. L is preferably linear saturated fatty acid with 16 to 24 carbons. M is fatty acid with 6 to 10 carbons, and is preferably linear saturated fatty acid. L2M is triacylglycerol having two L molecules and a single M molecule bound to a single glycerol molecule. LM2 is triacylglycerol having a single L molecule and two M molecules bound to a single glycerol molecule. L is preferably saturated fatty acid with 16 to 20 carbons, and more preferably saturated fatty acid with 16 to 18 carbons.

In L2M and LM2 described above, the mass ratio (L2M/LM2) of the content of L2M to the content of LM2 in the fats and oils of the oil-based food is 0 3 to 4.5. L2M/LM2 is preferably 0.55 to 2.5. When L2M/LM2 falls within the above-described range, occurrence of blooming and graining derived from the fats and oils of the oil-based food forming the continuous phase is reduced. As a result, favorable gloss is maintained. Moreover, the flavor of raw materials blended in the oil-based food stands out.

The fats and oils in the oil-based food of the present invention preferably contain L2M and LM2 of 0.01 to 10 mass% in total. The fats and oils in the oil-based food of the present invention more preferably contain L2M and LM2 of 0.1 to 7 mass% in total, much more preferably 0.5 to 5 mass%, and most preferably 1 to 4 mass%. When the total content (hereinafter also referred to as "L2M + LM2") of L2M and LM2 in the fats and oils of the oil-based food falls within the above-described range, occurrence of blooming and graining derived from the fats and oils of the oil-based food forming the continuous phase is reduced. As a result, favorable gloss is maintained. Moreover, the flavor of the raw materials blended in the oil-based food stands out.

Of the total amount of M in the constituent fatty acid contained in L2M and LM2 as described above, the percentage of fatty acid with 6 carbons is preferably equal to or less than 10 mass%, and more preferably equal to or less than 5 mass%. Of the total amount of M in the constituent fatty acid contained in L2M and LM2 as described above, the percentage of fatty acid with 10 carbons is preferably equal to or greater than 20 mass%, more preferably 40 to 100 mass%, much more preferably 50 to 100 mass%, and most preferably 60 to 100 mass%.

The fats and oils in the oil-based food of the present invention preferably contain MMM of equal to or greater than 0.01 mass% and less than 5 mass%. Hereinafter, MMM means triacylglycerol having three M molecules ester-bound to a single glycerol molecule. These three fatty acids (M) of MMM may be the same fatty acid or different fatty acids. Alternatively, MMM may be a mixture of multiple different types of triacylglycerol. Examples of such a mixture include a mixture of trioctanoyl glycerol and tridecanoyl glycerol. The constituent fatty acid with 6 to 10 carbons in MMM is preferably linear saturated fatty acid. The content of MMM in the fats and oils contained in the oil-based food is more preferably 0.04 to 4 mass%, much more preferably 0.08 to 3 mass%, and most preferably 0.12 to 2 mass%. When the content of MMM in the fats and oils contained in the oil-based food falls within the above-described range, more favorable gloss of the oil-based food is provided. As a result, the flavor of the materials blended in the oil-based food stands out.

Of the total amount of the constituent fatty acid of MMM as described above, fatty acid with 6 carbons is preferably equal to or less than 10 mass%, and more preferably equal to or less than 5 mass%. Of the total amount of the constituent fatty acid of MMM as described above, fatty acid with 10 carbons is preferably equal to or greater than 10 mass%, more preferably 20 to 100 mass%, and most preferably 40 to 80 mass%.

MMM contained as an optional component in the fats and oils of the oil-based food of the present invention as described above can be manufactured using a typical known method. For example, MMM can be manufactured in such a manner that fatty acid with 6 to 10 carbons and glycerol are heated to 120 to 180°C and the resultant is dehydrated and condensed. Such condensation reaction is preferably performed under reduced pressure. A catalyst can be used for the above-described condensation reaction. However, the above-described condensation reaction is preferably made in the absence of the catalyst. Note that MMM contained as a reaction residual of the raw material fats and oils in interesterified fats and oils containing L2M and LM2 as described below may be used as MMM.

Fats and oils (hereinafter also referred to as "L2M+LM2 fats and oils") containing L2M and LM2 of equal to or greater than 40 mass% (preferably 60 to 100 mass%) and which can be manufactured using a typical known method may be used as L2M and LM2 contained in the fats and oils in the oil-based food of the present invention as described above. The L2M+LM2 fats and oils may be, for example, fats and oils obtained in such a manner that a fat-and-oil mixture of MMM of 10 to 65 parts by mass (more preferably 20 to 55 parts by mass) and fats and oils (fully-hydrogenated oil using, as a raw material, rapeseed oil, soybean oil, or palm oil, for example) of 35 to 90 parts by mass (more preferably 45 to 80 parts by mass) is interesterified, the fats and oils (the fully-hydrogenated oil) having an iodine value of equal to or less than 5 and containing saturated fatty acid, which has 16 or more carbons, of equal to or greater than 90 mass% as constituent fatty acid. Fats and oils obtained in such a manner that the interesterified fats and oils are further fractionated may be used. Alternatively, fats and oils may be used, which are obtained in such a manner that a fat-and-oil mixture of MMM and fats and oils (e.g., rapeseed oil, soybean oil, or palm oil) containing saturated fatty acid, which has 16 or more carbons, of equal to or greater than 90 mass% as constituent fatty acid is interesterified and fully hydrogenated. Fats and oils obtained in such a manner that such fats and oils are further fractionated may be used. A typical known method is applicable to hydrogenation reaction and interesterification reaction. Any method of chemical interesterification using a synthetic catalyst such as sodium methoxide and enzymatic interesterification using lipase as a catalyst is applicable to the interesterification reaction. A typical known normal method such as dry fractionating (natural fractionating), emulsion fractionating (surfactant fractionating), and solvent fractionating is applicable to fractionating.

In a case where the mass ratio (L2M/LM2) of the content of L2M to the content of LM2 is 0 3 to 4.5, the above-described L2M+LM2 fats and oils can be used as an inhibitor for blooming and graining of the oil-based food. L2M/LM2 of the inhibitor is 0.3 to 3, and more preferably 0.55 to 2.5. The inhibitor may contain a diluting agent and the like in addition to the L2M+LM2 fats and oils. In the fats and oils of the oil-based food, the inhibitor is, as the L2M+LM2 fats and oils, preferably contained in 0.05 to 15 mass%, more preferably 0.2 to 10 mass%, and much more preferably 0.5 to 7 mass%. The inhibitor preferably contains L2M and LM2 of 50 to 80 mass% in total, and MMM of 0 to 40 mass%.

In the oil-based food of the present invention, the fats and oils of the oil-based food contain L2M and LM2, and the mass ratio (L2M/LM2) of the content of L2M to the content of LM2 is 0 3 to 4.5. As long as the above-described conditions are satisfied and the fats and oils are suitable for edible use, any fat-and-oil raw material may be used for manufacturing of the oil-based food of the present invention. Examples of the fat-and-oil raw material include coconut oil, palm kernel oil, palm oil, fractionated palm oil (e.g., palm olein, palm stearin, palm mid fraction, palm super olein), shea butter, fractionated shea oil, sal fat, fractionated sal oil, illipe butter, soybean oil, rapeseed oil, cotton oil, safflower oil, sunflower oil, rice oil, corn oil, sesame oil, olive oil, milk fat, cocoa butter, and oil mixtures and modified fats and oils (hydrogenated oil, interesterified oil, and fractionated oil) thereof.

In the oil-based food of the present invention, the fats and oils preferably contain palm-based fats and oils. The palm-based fats and oils described herein are fats and oils derived from palm oil. Examples of the palm-based fats and oils may include palm oil, fractionated palm oil, and modified oil (fats and oils obtained by one or more types of processing of hydrogenation, interesterification, and fractionating) thereof. More specifically, the examples may include palm olein and palm stearin as one-stage fractionated oil of palm oil, palm olein (palm super olein) and palm mid fraction as two-stage fractionated oil of palm olein, and palm olein (soft palm) and palm stearin (hard stearin) as two-stage fractionated oil of palm stearin. Further, the examples may include interesterified oil and hydrogenated oil obtained from an oil mixture, which is as raw material oil, of one or more types of the above-described fats and oils and other fats and oils than the palm-based fats and oils.

Even when the oil-based food of the present invention uses the palm-based fats and oils, occurrence of blooming and graining is reduced. Thus, use of hydrogenated oil (partially-hydrogenated oil) leading to trans-fatty acid can be reduced. The oil-based food of the present invention preferably contains, in the fats and oils, palm-based fats and oils of equal to or greater than 20 mass%, more preferably equal to or greater than 40 mass%, and much more preferably equal to or greater than 50 mass%. An upper limit is not specifically provided, and is a value obtained in such a manner that, e.g., the contents of L2M + LM2 and MMM are subtracted from 100 mass% of the fat-and-oil content in the oil-based food. The upper limit is preferably equal to or less than 99 mass%, more preferably equal to or less than 94 mass%, and much more preferably equal to or less than 90 mass%. Note that in the case of the interesterified oil or the hydrogenated oil obtained from the oil mixture, which is as the raw material oil, of the palm-based fats and oils and other fats and oils than the palm-based fats and oils, the amount of palm-based fats and oils according to the content of the palm-based fats and oils in the raw material fats and oils is used.

In the oil-based food of the present invention, the content of the trans-fatty acid is preferably reduced for health reasons. The content of the trans-fatty acid in the oil-based food of the present invention is preferably 0 to 5 mass%, more preferably 0 to 3 mass%, and much more preferably 0 to 1 mass%.

The content of the fats and oils in the oil-based food of the present invention is preferably 10 to 100 mass%, more preferably 20 to 100 mass%, and much more preferably 30 to 100 mass%. The content of the fats and oils in the oil-based food of the present invention includes, in addition to the blended fats and oils, fats and oils (e.g., cocoa butter or milk fat) contained in the raw materials (cacao mass, cocoa powder, or whole milk powder). For example, the content of the fats and oils (the cocoa butter) in the cacao mass is generally 55 mass% (a fat percentage of 0.55). The content of the fats and oils (the cocoa butter) in the cocoa powder is 11 mass% (a fat percentage of 0.11). The content of the fats and oils (the milk fat) in the whole milk powder is 25 mass% (a fat percentage of 0.25). The content of the fats and oils in the oil-based food is a value obtained in such a manner that the blending amount (mass%) of each raw material in the oil-based food is multiplied by the fat percentage and the obtained values are added up.

One of preferable forms of the oil-based food of the present invention is chocolate.

The chocolate in the present invention is not limited to chocolate specified by "Fair Competition Codes concerning Labeling on Chocolate and/or Chocolate-Like Food" (Japan Chocolate Industry Fair Trade Conference) or legal provisions. The chocolate of the present invention contains edible fats and oils and saccharides as main raw materials. If needed, the main raw materials additionally contain cacao components (e.g., cacao mass and cocoa powder), dairy products, flavors, emulsifiers, and the like. The chocolate is manufactured through some or all of chocolate manufacturing processes (a mixing process, a refining process, a conching process, a molding process, a cooling process, and the like). Moreover, the chocolate of the present invention includes not only dark chocolate and milk chocolate but also white chocolate and colored chocolate.

The chocolate of the present invention preferably contains fats and oils of 25 to 65 mass%. The content of the fats and oils in the chocolate of the present invention is more preferably 28 to 55 mass%, and much more preferably 30 to 50 mass%. Regardless of a tempered type or a non-tempered type, the chocolate of the present invention shows favorable gloss (luster) with reduced blooming.

In the tempered chocolate, the fats and oils forming the chocolate have cocoa butter and/or similar fat with a symmetrical triacylglycerol structure similar to that of cocoa butter. The symmetrical triacylglycerol crystal structure in the tempered chocolate needs to be adjusted to a V-shape. For this reason, an extremely-complicated process called "tempering" is taken in manufacturing of the tempered chocolate.

In a case where the chocolate of the present invention is the tempered chocolate, the fats and oils contained in the chocolate of the present invention preferably contain LOL. Hereinafter, O and LOL mean as follows. O is oleic acid. LOL is triacylglycerol having oleic acid (O) bound to the 2-position and having saturated fatty acid (L) bound to the 1- and 3-positions, the saturated fatty acid (L) having 16 to 24 carbons. The content of LOL in the fats and oils contained in the chocolate is preferably 45 to 95 mass%, more preferably 50 to 90 mass%, and much more preferably 55 to 85 mass%. The same saturated fatty acid is not necessarily used as that of LOL bound to the 1- and 3-positions and having 16 to 24 carbons. Of the total amount of the used constituent fatty acid L of LOL, saturated fatty acid with 16 to 18 carbons preferably occupies equal to or greater than 90 mass%, and more preferably equal to or greater than 95 mass%. When the LOL content in the fats and oils contained in the chocolate falls within the above-described range, the fat-and-oil crystal of the chocolate is easily adjusted to the V-shape (tempering is facilitated).

Fats and oils (fats and oils containing LOL of equal to or greater than 40 mass%, and preferably equal to or greater than 60 mass%) containing rich LOL may be used as the fats and oils contained in the chocolate such that the fats and oils contained in the tempered chocolate of the present invention contains LOL described above. Examples of the fats and oils (hereinafter also referred to as "LOL fats and oils") containing rich LOL include cocoa butter, palm oil, shea butter, sal fat, allanblackia fat, mowrah fat, illipe butter, mango kernel oil, and fractionated oil thereof. As already known, fats and oils may be used, which are obtained in such a manner that a mixture of palmitic acid, stearic acid, or lower alcohol ester thereof and high oleic acid fats and oils such as high oleic sunflower oil is interesterified using a 1,3-position selectivity lipase preparation. Alternatively, fats and oils obtained by fractionating of the resultant interesterified fats and oils may be used.

The fats and oils in the tempered chocolate of the present invention may contain, as one of LOL, SOS (1,3-distearoyl-2-oleoylglycerol) having oleic acid bound to the 2-position and stearic acid bound to the 1- and 3-positions. The content of SOS in the fats and oils contained in the chocolate is preferably 25 to 60 mass%, and more preferably 30 to 55 mass%. When the content of SOS in LOL described above falls within the above-described range, tempering of the chocolate is facilitated, and blooming resistance is further improved.

Tempering of the tempered chocolate of the present invention is the operation of generating the stable crystal nucleus of fats and oils in chocolate in a molten state (a state in which a fat-and-oil crystal is fully melted). By such operation, LOL contained in the fats and oils of the chocolate is solidified as a stable crystal. Specific examples include the operation of decreasing the temperature of chocolate molten at 40 to 50°C to about 26 to 29°C and subsequently heating the chocolate to about 28 to 31°C again. Alternatively, seeding may be performed instead of tempering. For example, seeding may be performed using a seed agent as the stable crystal of LOL such as SOS or BOB (1,3-dibehenoyl-2-oleoylglycerol). That is, at such a temperature that the stable crystal as the above-described seed agent is not fully melted, the seed agent of 0.05 to 5 mass% is added (seeded) to the fats and oils in the chocolate. In this manner, seeding may be replaced with tempering.

In a case where the chocolate of the present invention is non-tempered chocolate, the fats and oils contained in the chocolate of the present invention preferably contain non-tempered hard butter. The non-tempered hard butter exhibits melting properties similar to those of cocoa butter, but has a totally-different fat-and-oil structure. The non-tempered hard butter is roughly divided into a lauric acid type and a non-lauric acid type. Any of the lauric acid type and the non-lauric acid type exhibits low compatibility with cocoa butter. However, the non-tempered hard butter is inexpensive as compared to cocoa butter. Moreover, no complicated tempering is necessary for the non-tempered chocolate, leading to favorable workability. Thus, the non-tempered chocolate has been broadly used in the fields of confectionery and breadmaking.

Of the fats and oils (the hard butter) mainly forming the non-tempered chocolate, fats and oils obtained in such a manner that a hard component (palm kernel stearin) obtained by fractionating of palm kernel oil is fully hydrogenated have been typically known as the lauric acid hard butter. This hard butter exhibits extremely-sharp melting properties, but exhibits extremely-poor compatibility with cocoa butter. For this reason, blending of cocoa butter with the chocolate using the lauric acid hard butter needs to be reduced as much as possible. Thus, the chocolate using such hard butter lacks cacao flavor. Moreover, there is also a disadvantage that the luster of the chocolate is deteriorated over time. In addition, there is another disadvantage that flavor is significantly deteriorated due to hydrolysis during storing.

Of the fats and oils (the hard butter) mainly forming the non-tempered chocolate, the non-lauric acid hard butter is also called trans acid hard butter. Fats and oils obtained in such a manner that liquid oil such as low-melting-point palm olein or soybean oil is isomerized and hydrogenated and a high-melting-point component or an intermediate-melting-point component obtained in such a manner that the fats and oils obtained by isomerization and hydrogenation are fractionated as necessary have been typically known as the trans acid hard butter. The non-lauric acid hard butter exhibits less sharp melting properties as compared to the lauric acid hard butter, but exhibits better compatibility with cocoa butter as compared to the lauric acid hard butter. The chocolate using the non-lauric acid hard butter can be blended with a relatively-greater amount of cocoa butter than that of the chocolate using the lauric acid hard butter. However, the non-lauric acid hard butter contains a great amount of trans-fatty acid. Thus, use of the non-lauric acid hard butter has been avoided since an adverse effect of the trans-fatty acid on health had been recognized.

In a case where the non-tempered chocolate of the present invention uses, in the fats and oils, non-tempered hard butter containing interesterified fats and oils, blooming reduction and favorable gloss (luster) as the advantageous effects of the present invention become notable. Moreover, use of the non-tempered hard butter containing the interesterified fats and oils can increase the content of cocoa butter in the chocolate. Thus, the chocolate can be provided with favorable flavor. The content of cocoa butter in the fats and oils of the non-tempered chocolate of the present invention is preferably 5 to 50 mass%, and more preferably 10 to 30 mass%. As long as the content of fatty acid (M) with 6 to 10 carbons in the total constituent fatty acid of the interesterified fats and oils is equal to or less than 10 mass% (preferably 0 to 5 mass%), the above-described interesterified fats and oils may be any of lauric-based interesterified fats and oils and non-lauric-based interesterified fats and oils.

In the above-described lauric-based interesterified fats and oils, the content of lauric acid in the total amount of the constituent fatty acid of the interesterified fats and oils is equal to or greater than 10 mass% (preferably 15 to 60 mass%). The lauric-based interesterified fats and oils preferably contain lauric-based fats and oils as raw material fats and oils for interesterification. In the lauric-based fats and oils, the content of lauric acid in the total amount of fatty acid forming the fats and oils is equal to or greater than 30 mass%. Examples of the lauric-based fats and oils include: coconut oil; palm kernel oil; fractionated oil obtained by fractionating thereof, such as palm kernel olein and palm kernel stearin; fats and oils obtained by interesterification thereof; and hydrogenated oil thereof. For the lauric-based fats and oils, one or more types selected from the above-described fats and oils may be used in the raw material fats and oils of the lauric-based interesterified fats and oils.

The lauric-based interesterified fats and oils may be fats and oils obtained by interesterification of only the lauric-based fats and oils. Alternatively, the lauric-based interesterified fats and oils may be fats and oils obtained in such a manner that a fat-and-oil mixture of the lauric-based fats and oils and the non-lauric-based fats and oils is interesterified. Of the total amount of the fatty acid forming the fats and oils, the non-lauric-based fats and oils are fats and oils containing fatty acid, which has 16 or more carbons, of exceeding 90 mass%. Examples of such fats and oils include rapeseed oil, high-erucic-acid rapeseed oil, soybean oil, corn oil, safflower oil, cotton oil, sunflower oil, cocoa butter, shea butter, sal fat, palm oil, and hydrogenated fats and oils thereof. One or more types selected from these non-lauric-based fats and oils may be used as the raw material fats and oils of the non-lauric-based interesterified fats and oils.

In a case where the lauric-based interesterified fats and oils are interesterified fats and oils of a fat-and-oil mixture of the lauric-based fats and oils and the non-lauric-based fats and oils, the mixing ratio between the lauric-based fats and oils and the non-lauric-based fats and oils is, in terms of a mass ratio, preferably 30:70 to 60:40, more preferably 35:65 to 55:45, and much more preferably 40:60 to 50:50.

In the lauric-based interesterified fats and oils, the content of lauric acid in the total amount of the constituent fatty acid of the interesterified fats and oils is equal to or greater than 10 mass% (preferably 15 to 60 mass%). In the case of the lauric-based interesterified fats and oils, if interesterification processing is performed, processing such as fractionating or hydrogenation may be performed once or repeated multiple times before and after the interesterification processing. The iodine value of the lauric-based interesterified fats and oils is preferably 0 to 40, more preferably 5 to 30, and much more preferably 10 to 25.

In the above-described non-lauric-based interesterified fats and oils, the content of lauric acid in the total amount of the constituent fatty acid of the interesterified fats and oils is less than 10 mass%. The content of lauric acid is preferably 0 to 5 mass%, and more preferably 0 to 2 mass%. The non-lauric-based interesterified fats and oils preferably contain non-lauric-based fats and oils as raw material fats and oils for interesterification. The non-lauric-based fats and oils are as described above. One or more types of non-lauric-based fats and oils may be used as the raw material fats and oils of the non-lauric-based interesterified fats and oils.

The raw material fats and oils of the non-lauric-based interesterified fats and oils preferably contain the palm-based fats and oils. The palm-based fats and oils are as described above. In a case where the palm-based fats and oils are contained in the raw material fats and oils of the non-lauric-based interesterified fats and oils, the content of the palm-based fats and oils in the raw material fats and oils is preferably 20 to 100 mass%, more preferably 40 to 100 mass%, and much more preferably 60 to 100 mass%.

In the non-lauric-based interesterified fats and oils, the content of lauric acid in the total amount of the constituent fatty acid of the interesterified fats and oils is less than 10 mass% (preferably 0 to 5 mass%, and more preferably 0 to 2 mass%). In the case of the lauric-based interesterified fats and oils, if the interesterification processing is performed, processing such as fractionating or hydrogenation may be performed once or repeated multiple times before and after the interesterification processing. The iodine value of the non-lauric-based interesterified fats and oils is preferably 10 to 70, more preferably 20 to 55, and much more preferably 25 to 45.

Each of the lauric-based interesterified fats and oils and the non-lauric-based interesterified fats and oils as described above may be used alone. Alternatively, both types of fats and oils may be used in combination. As another alternative, other fats and oils (e.g., the lauric acid hard butter, the trans acid hard butter, or cocoa butter) may be used in combination. The content of the lauric-based interesterified fats and oils and/or the non-lauric-based interesterified fats and oils in the fats and oils of the non-tempered chocolate of the present invention is preferably 3 to 99.99 mass%, more preferably 30 to 98 mass%, much more preferably 50 to 95 mass%, and most preferably 60 to 90 mass%.

The chocolate of the present invention preferably contains the saccharides in addition to the fats and oils. Examples of available saccharides include sucrose (sugar and powder sugar), lactose, glucose, fructose, maltose, reduced saccharified starch, liquid sugar, enzymatically-converted starch syrup, isomerized liquid sugar, sucrose-combined starch syrup, reducing sugar polydextrose, oligosaccharide, sorbitol, reduced lactose, trehalose, xylose, xylitose, maltitol, erythritol, mannitol, raffinose, and dextrin. The content of the saccharides in the chocolate of the present invention is preferably 20 to 60 mass%, more preferably 25 to 55 mass%, and much more preferably 30 to 50 mass%.

In addition to the fats and oils and the saccharides, raw materials commonly blended in chocolate can be used for the chocolate of the present invention. Specific examples of available raw materials include dairy products such as whole milk powder and skim milk; cacao components such as cacao mass and cocoa powder; various types of powder such as soy flour, soy protein, fruit processed products, vegetable processed products, green tea powder, and coffee powder; gums; starches; emulsifiers; antioxidants; colorants; and flavors.

The chocolate of the present invention can be manufactured by a typical known method. For example, fats and oils, cacao components, saccharides, dairy products, and emulsifiers can be used as raw materials in manufacturing of the chocolate of the present invention. The chocolate of the present invention can be manufactured through a mixing process, a refining process (refining), a conching process (conching), a tempering process (if needed), and a cooling process.

The chocolate of the present invention can be used for all chocolate applications. For example, a block of chocolate having been removed from a mold or having been cut is edible as it is. Moreover, the chocolate of the present invention can be used for bakery products such as bread, cakes, western confectionery, baked confectionery, doughnuts, and cream puff cakes. That is, the chocolate of the present invention can be, for composite bakery products, used as coating materials, filling materials, or chocolate chips to be mixed with dough, and the like.

One preferable form of the oil-based food of the present invention is a plastic fat-and-oil composition.

The plastic fat-and-oil composition exhibits, as properties thereof, plasticity. Thus, the plastic fat-and-oil composition can be used for kneading or folding in manufacturing of bakery dough. Further, the plastic fat-and-oil composition is suitable for applications such as spread, coating cream, and sandwich cream for bakery products after baking. Examples of the plastic fat-and-oil composition include margarine, fat spread, and shortening. The content of trans-fatty acid in the plastic fat-and-oil composition of the present invention is low. Thus, even when the palm-based fats and oils or the lauric-based fats and oils are used, favorable gloss is maintained with favorable flavor.

The plastic fat-and-oil composition of the present invention may contain LX2 and XXX in fats and oils. LX2 and XXX provide preferable gloss and extensibility to the plastic fat-and-oil composition. Hereinafter, X, LX2, and XXX mean as follows. X is unsaturated fatty acid with 16 to 24 carbons. X is preferably unsaturated fatty acid with 16 to 20 carbons, and more preferably unsaturated fatty acid with 16 to 18 carbons. Moreover, X is preferably linear unsaturated fatty acid. LX2 is triacylglycerol having a single L molecule and two X molecules ester-bound to a single glycerol molecule. XXX is triacylglycerol having three X molecules ester-bound to a single glycerol molecule. LX2 and XXX provide preferable gloss and extensibility to the plastic fat-and-oil composition. However, a higher percentage of the fats and oils in the plastic fat-and-oil composition results in a tendency of remaining oiliness in the mouth. Thus, the total content of LX2 and XXX in the fats and oils of the plastic fat-and-oil composition is preferably 10 to 70 mass%, more preferably 15 to 65 mass%, and much more preferably 20 to 60 mass%.

Fats and oils (fats and oils containing LX2 and XXX of equal to or greater than 40 mass%, preferably equal to or greater than 60 mass%) containing rich LX2 and XXX may be used as the fats and oils contained in the plastic fat-and-oil composition, such that the fats and oils contained in the plastic fat-and-oil composition of the present invention contain one or both of LX2 and XXX described above. Examples of the fats and oils (hereinafter also referred to as LX2+XXX fats and oils) containing rich LX2 and XXX include fats and oils in the form of liquid oil at 10°C. Specifically, the examples include soybean oil, rapeseed oil, high-oleic-acid rapeseed oil, cotton oil, sunflower oil, high-oleic-acid sunflower oil, safflower oil, high-oleic-acid safflower oil, corn oil, rice oil, palm super olein, and the like. The LX2+XXX fats and oils may be a low-melting-point component obtained by fractionating of the non-lauric-based fats and oils or the interesterified fats and oils of the non-lauric-based fats and oils described above.

The fats and oils contained in the plastic fat-and-oil composition of the present invention may include L2X. L2X is triacylglycerol with a vertical SFC curve. L2X provides favorable melting mouthfeel of the plastic fat-and-oil composition. The plastic fat-and-oil composition of the present invention exhibits favorable plasticity even when L2X is used. Hereinafter, L2X means as follows. L2X is triacylglycerol having two L molecules and a single X molecule ester-bound to a single glycerol molecule. The content of L2X in the fats and oils contained in the plastic fat-and-oil composition is preferably 10 to 55 mass%, more preferably 15 to 50 mass%, and much more preferably 20 to 45 mass%.

Fats and oils (fats and oils containing L2X of equal to or greater than 40 mass%, and preferably equal to or greater than 60 mass%) containing rich L2X may be used as the fats and oils contained in the plastic fat-and-oil composition such that the fats and oils contained in the plastic fat-and-oil composition of the present invention contain L2X described above. Examples of the fats and oils containing rich L2X (hereinafter also referred to as "L2X fats and oils") include cocoa butter, palm oil, shea butter, sal fat, allanblackia fat, mowrah fat, illipe butter, mango kernel oil, and fractionated oil thereof. As already described, fats and oils obtained in such a manner that interesterification reaction is made between palmitic acid, stearic acid, or lower alcohol ester thereof and high oleic acid fats and oils such as high oleic sunflower oil by means of a 1,3-position selectivity lipase preparation and the resultant is subsequently fractionated as necessary may be used. Alternatively, the L2X fats and oils may be the interesterified fats and oils of the non-lauric-based fats and oils or fractionated oil thereof, the fats and oils containing fatty acid, which has 16 or more carbons, of equal to or greater than 90 mass%.

The L2X fats and oils and the LX2+XXX fats and oils described above are preferably contained as the constituent fats and oils of the plastic fat-and-oil composition of the present invention. The L2X fats and oils are, in the fats and oils of the plastic fat-and-oil composition of the present invention, preferably contained in 15 to 70 mass%, more preferably 20 to 65 mass%, and much more preferably 25 to 60 mass%. The LX2+XXX fats and oils are, in the fats and oils of the plastic fat-and-oil composition of the present invention, preferably contained in 10 to 70 mass%, more preferably 15 to 65 mass%, and much more preferably 20 to 60 mass%.

The plastic fat-and-oil composition of the present invention may contain milk-derived fats and oils (butter, milk fat, and fractionated oil thereof). Even when the plastic fat-and-oil composition of the present invention contains the milk-derived fats and oils, occurrence of blooming and graining is reduced, excellent melting mouthfeel is provided, and favorable gloss is maintained. The plastic fat-and-oil composition of the present invention preferably contains, in the fats and oils, the milk-derived fats and oils of 5 to 50 mass%, more preferably 10 to 45 mass%, and much more preferably 15 to 40 mass%. If needed, the plastic fat-and-oil composition of the present invention may contain the lauric-based fats and oils or the lauric-based interesterified fats and oils.

The plastic fat-and-oil composition of the present invention can be, as other components than the fats and oils, blended with components commonly blended in a fat-and-oil composition used for bakery products. Examples of other components include water; emulsifiers; thickening stabilizers; salty agents such as dietary salt and kalium chloride; acetic acid; acidulants such as lactic acid and gluconic acid; saccharides; sugar alcohols; sweenteners such as stevia and aspartame; β-carotene; colorants such as caramel and monascus pigments; tocopherol; antioxidants such as tea extracts (e.g., catechin) and rutin; vegetal proteins such as wheat protein and soybean protein; whole milk powder; dairy products such as skim milk and lactoprotein; eggs and egg processed products; flavors; seasoners; pH adjusters; food preservatives; fruits; fruit juice; coffee; nut paste; spices; cacao mass; cocoa powder; food materials such as food grains, beans, vegetables, meat, and fish and shellfish; and food additives.

Examples of the plastic fat-and-oil composition of the present invention include margarine and fat spread with an aqueous phase; and shortening with no aqueous phase. An emulsifier with an aqueous phase is preferably a water-in-oil emulsifier. However, the emulsifier may have a reverse phase (an oil-in-water emulsifier), or may be of a composite emulsion type. In the case of the water-in-oil emulsifier, the content of water is preferably 3 to 50 mass%, and more preferably 5 to 40 mass%. The plastic fat-and-oil composition of the present invention preferably contains fats and oils of 40 to 100 mass%, more preferably 50 to 95 mass%, and much more preferably 60 to 90 mass%.

The method for manufacturing the plastic fat-and-oil composition of the present invention is not specifically limited. The plastic fat-and-oil composition of the present invention can be manufactured by the conditions and method for manufacturing a known plastic fat-and-oil composition. Specifically, the plastic fat-and-oil composition can be manufactured in such a manner that blended oil soluble components are mixed and melted. In the case of providing plasticity, the blended oil soluble components are first mixed and melted, and in this manner, an oil phase is prepared. Subsequently, the oil phase and an aqueous phase prepared as necessary are mixed and emulsified. Thereafter, the emulsion mixture is cooled and crystallized, and in this manner, the plastic fat-and-oil composition can be manufactured. Cooling and crystallization are preferably cooling plasticization. A cooling condition is preferably equal to or higher than -0.5°C/minute, and more preferably equal to or higher than - 5°C/minute. In this case, quick cooling is more preferable than gradual cooling. Moreover, after preparation of the oil phase or mixing emulsification, the preparation is preferably subjected to sterilization processing. Examples of the sterilization processing include a batch method at a tank, a plate heat exchanger, and a continuous method using a scraping heat exchanger. Examples of cooling equipment include a hermetic continuous tube cooling machine such as a margarine manufacturing machine including, e.g., a votator, a combinator, and a perfector, a plate heat exchanger, and the like. Moreover, the examples of the cooling equipment also include a combination of an open diacooler and a complector.

The content of the trans-fatty acid of the plastic fat-and-oil composition of the present invention is low. For this reason, even when the palm-based fats and oils or the lauric-based fats and oils are used, the plastic fat-and-oil composition exhibits blooming resistance and graining resistance as well as maintains favorable gloss. Moreover, the plastic fat-and-oil composition of the present invention provides favorable flavor and excellent melting mouthfeel. The plastic fat-and-oil composition of the present invention can be, for example, used for kneading and folding into bakery dough for confectionery and bread, for spread and coating of bakery products, and for whip such as butter cream. A bakery product obtained by kneading or folding of the plastic fat-and-oil composition of the present invention and the chocolate of the present invention may be combined to manufacture a composite bakery product.

In the fats and oils contained in the oil-based food of the present invention, the L2M content, the LM2 content, the MMM content, the L2O content, the S2O content, the L2X content, the LX2 content, and the XXX content can be measured in accordance with gas chromatography (JAOCS, vol 70, 11, 1111-1114 (1993)), for example. The LOL content can be calculated based on the L2O content and a value obtained by measurement of a LOL/L2O ratio in accordance with J. High Resol. Chromatogr., 18, 105-107 (1995), for example. The SOS content can be similarly obtained. Note that L2O described above is triacylglycerol having two L molecules and a single O molecule ester-bound to a single glycerol molecule. S2O described above is triacylglycerol having two S molecules and a single O molecule ester-bound to a single glycerol molecule.

### EXAMPLES

Next, the present invention will be described with reference to examples, but is not limited to these examples.

### [Analysis Method]

A L2M content, a LM2 content, a MMM content, a L2O content, a S2O content, a L2X content, a LX2 content, and a XXX content in fats and oils were measured in accordance with gas chromatography (JAOCS, vol 70, 11, 1111-1114 (1993)). ALOL content was calculated based on the L2O content and a value obtained by measurement of a LOL/L2O ratio in accordance with J. High Resol. Chromatogr., 18, 105-107 (1995). A SOS content was also similarly calculated.

The content of trans-fatty acid in the fats and oils was measured by gas chromatography in accordance with AOCS Ce1f-96.

### [Preparation of MMM]

(MMM-1): MMM was synthesized as MMM-1, MMM being caprylic acid and captic acid as constituent fatty acids and a mass ratio thereof being 75:25.
(MMM-2): MMM was synthesized as MMM-2, MMM being caprylic acid and captic acid as constituent fatty acids and a mass ratio thereof being 3:7.

### [Preparation of L2M+LM2 Fats and Oils]

(L2M+LM2 Fats and Oils - 1): 1 mol of tricaprylin and 6 mols of ethyl stearate were mixed together. Subsequently, an interesterified mixture was obtained by interesterification using 1,3-position specific lipase. After fatty acid ethyl had been distilled from the interesterified mixture, a solvent was fractionated from the distillation residue. In this manner, L2M+LM2 Fats and Oils - 1 were obtained. In L2M+LM2 Fats and Oils - 1, the content of S10S (1,3-distearoyl-2-capricglycerol) is 94.8 mass%.
(L2M+LM2 Fats and Oils - 2): 86 parts by mass of rapeseed oil and 14 parts by mass of MMM-1 were mixed together. Subsequently, interesterified fats and oils were obtained by random interesterification using sodiummethylate as a catalyst. After a solvent had been fractionated from fats and oils obtained by full hydrogenation of the interesterified fats and oils, L2M+LM2 Fats and Oils - 2 were obtained. In L2M+LM2 Fats and Oils - 2, the total content of L2M and LM2 is 95.4 mass%, and the mass ratio (L2M/LM2) of the L2M content to the LM2 content is 4.1.
(L2M+LM2 Fats and Oils - 3): 50 parts by mass of rapeseed oil and 50 parts by mass of MMM-2 were mixed together. Subsequently, interesterified fats and oils were obtained by random interesterification using sodiummethylate as a catalyst. After a solvent had been fractionated from fats and oils obtained by full hydrogenation of the interesterified fats and oils, L2M+LM2 Fats and Oils - 3 were obtained. In L2M+LM2 Fats and Oils - 3, the total content of L2M and LM2 is 97.2 mass%, and the mass ratio (L2M/LM2) of the L2M content to the LM2 content is 0.7.
(L2M+LM2 Fats and Oils - 4): 50 parts by mass of fully-hydrogenated rapeseed oil and 50 parts by mass of MMM-2 were mixed together. Subsequently, L2M+LM2 Fats and Oils - 4 were obtained by random interesterification using sodiummethylate as a catalyst. In L2M+LM2 Fats and Oils - 4, the content of MMM is 19.9 mass%, the total content of L2M and LM2 is 74.6 mass%, and the mass ratio (L2M/LM2) of the L2M content to the LM2 content is 0.7.

### [Preparation of LOL Fats and Oils]

(LOL Fats and Oils - 1): cocoa butter (a LOL content of 85.3 mass% and a SOS content of 29.0 mass%) was used as LOL Fats and Oils - 1.
(LOL Fats and Oils - 2): 40 parts by mass of high-oleic sunflower oil and 60 parts by mass of ethyl stearate were mixed together. Subsequently, an interesterified mixture was obtained by interesterification using 1,3-position specific lipase. After fatty acid ethyl had been distilled from the interesterified mixture, a solvent was fractionated from the distillation residue. In this manner, LOL Fats and Oils - 2 were obtained. In LOL Fats and Oils - 2, the LOL content is 79.2 mass%, and the SOS content is 66.7 mass%.

### [Preparation of L2X Fats and Oils]

(L2X Fats and Oils - 1): palm oil (an iodine value of 53 and a L2X content of 47.8 mass%) was used as L2X Fats and Oils - 1.

### [Preparation of LX2+XXX Fats and Oils]

(LX2+XXX Fats and Oils - 1): soybean oil (an iodine value of 131 and a L2X+XXX content of 94.6 mass%) was used as LX2+XXX Fats and Oils - 1.

### [Chocolate Preparation 1]

According to compositions of Table 1, chocolate according to first to second comparative examples and first to third examples was subjected to mixing, refining, and conching in accordance with an ordinary method. A seed agent, which contains a stable crystal of SOS, of 1.0 mass% with respect to oil is added (seeded) to the resultant chocolate in a molten liquid state. The seeded chocolate in the molten liquid state was cooled, solidified, and removed from a mold. After removal from the mold, the gloss of the chocolate was evaluated in accordance with the following criteria. Moreover, after removal from the mold, the flavor of the chocolate held at 20°C for one week was evaluated in accordance with the following criteria. Further, a temperature cycle was performed for the chocolate held at 20°C for one week, the temperature cycle including, as a single cycle, holding at 32°C for 12 hours and holding at 20°C for 12 hours. Blooming at a chocolate surface was observed in every seven cycles. Results were evaluated in accordance with the following criteria. The results are shown in Table 1.

### [Chocolate Evaluation Criteria]

### (Gloss)

A: Excellent Gloss
B: Usual
C: No Gloss

### (Flavor)

A: Strong Feeling of Cacao
B: Strongish Feeling of Cacao
C: Usual

### (Blooming)

-: Favorable without Blooming
-+: Slight Blooming
+: Failure with Blooming

**[Table 1]**

| [Table 1] Chocolate Com positions and Evaluation Results | | | | | |
|---|---|---|---|---|---|
| | 1st Comparative Example | 2nd Comparative Example | 1st Example | 2nd Example | 3rd Example |
| Raw Material Composition (mass%) | | | | | |
| Cacao Mass | 40.0 | 40.0 | 40.0 | 40.0 | 40.0 |
| LOL Fats and Oils - 1 | 12.0 | 7.0 | 6.3 | 6.3 | 6.3 |
| LOL Fats and Oils - 2 | - | 5.0 | 5.0 | 5.0 | 5.0 |
| L2M+LM2 Fats and Oils - 1 | - | - | - | - | - |
| L2M+LM2 Fats and Oils - 2 | - | - | 0.7 | - | - |
| L2M+LM2 Fats and Oils - 3 | - | - | - | 0.7 | - |
| L2M+LM2 Fats and Oils - 4 | - | - | - | - | 0.7 |
| Sugar | 47.5 | 47.5 | 47.5 | 47.5 | 47.5 |
| Emulsifier | 0.45 | 0.45 | 0.45 | 0.45 | 0.45 |
| Flavor | 0.05 | 0.05 | 0.05 | 0.05 | 0.05 |
| Total | 100 | 100 | 100 | 100 | 100 |
| Fat-and-Oil Content (mass%) in Chocolate | 34.0 | 34.0 | 34.0 | 34.0 | 34.0 |
| L2M+LM2 (mass%) in Fats and Oils of Chocolate | - | - | 2.0 | 2.0 | 1.5 |
| L2M/LM2 | - | - | 4.1 | 0.7 | 0.7 |
| SOS (mass%) | 29.0 | 34.5 | 33.9 | 33.9 | 33.9 |
| LOL (mass %) | 85.3 | 84.4 | 82.7 | 82.7 | 82.7 |
| MMM (mass %) | - | - | - | - | 0.4 |
| Trans-Fatty Acid Content (mass%) in Chocolate | less than 1 | less than 1 | less than 1 | less than 1 | less than 1 |

| Evaluation Results | | | | | |
|---|---|---|---|---|---|
| Gloss | B | B | A | A | A |
| Flavor | C | C | B | A | A |
| Blooming | | | | | |
| 7th Cycle | + | - | - | - | - |
| 14th Cycle | | -+ | - | - | - |
| 21st Cycle | | + | - | - | - |
| 28th Cycle | | | - | - | - |
| 35th Cycle | | | -+ | -+ | -+ |
| 42nd Cycle | | | -+ | -+ | -+ |
| 49th Cycle | | | -+ | -+ | -+ |
| 56th Cycle | | | + | + | + |

### [Preparation of Plastic Fat-and-Oil Composition 1]

Based on compositions of Table 2, shortening according to third to fourth comparative examples and fourth to sixth examples was manufactured by mixing melting and quick cooling and mixing in accordance with an ordinary method. A temperature cycle was performed for the shortening, the temperature cycle including, as a single cycle, holding at 5°C for 12 hours and holding at 20°C for 12 hours. The gloss of the shortening and the state of the composition at the fourth cycle were observed. Results were evaluated in accordance with the following criteria. The results are shown in Table 2.

### [Shortening Evaluation Criteria]

### (Gloss)

A: Favorable Gloss and Extremely-Smooth Appearance
B: Favorable Gloss and Smooth Appearance
C: Usual
D: Appearance with Slight Dullness
E: Textured Appearance

### (State of Composition)

A: Excellent State with Fine Texture
B: Favorable State with Fine Texture
C: Usual
D: State with Slightly-Rough Texture
E: State with Extremely-Rough Texture or Grains

**[Table 2]**

| [Table 2] Shortening Composition and Evaluation Results | | | | | |
|---|---|---|---|---|---|
| | 3rd Comparative Example | 4th Comparative Example | 4th Example | 5th Example | 6th Example |
| Raw Material Composition (mass%) | | | | | |
| L2X Fats and Oils -1 | 73.5 | 71.5 | 71.5 | 70.5 | 68.5 |
| LX2+XXX Fats and Oils -1 | 25.0 | 25.0 | 25.0 | 25.0 | 25.0 |
| Palm Stearin | 1.5 | 1.5 | 1.5 | 1.5 | 1.5 |
| L2M+LM2 Fats and Oils -1 | - | 2.0 | - | - | - |
| L2M+LM2 Fats and Oils - 2 | - | - | - | - | - |
| L2M+LM2 Fats and Oils - 3 | - | - | - | - | - |
| L2M+LM2 Fats and Oils - 4 | - | - | 2.0 | 3.0 | 5.0 |
| Total | 100 | 100 | 100 | 100 | 100 |
| L2M+LM2 (mass%) in Shortening | - | 2.0 | 1.4 | 2.2 | 3.7 |
| L2M/LM2 | - | ∞ | 0.7 | 0.7 | 0.7 |
| L2X (mass%) | 36.7 | 35.8 | 35.8 | 35.3 | 34.3 |
| LX2+XXX (mass%) | 54.0 | 53.3 | 53.3 | 52.8 | 52.0 |
| MMM (mass%) | - | - | 0.4 | 0.6 | 1.0 |
| Trans-Fatty Acid Content (mass%) in Shortening | less than 1 | less than 1 | less than 1 | less than 1 | less than 1 |

| Evaluation Results | | | | | |
|---|---|---|---|---|---|
| Gloss | E | C | B | A | A |
| Composition State | E | B | B | B | A |

## Claims

1. Oil-based food comprising:
L2M and LM2 in fats and oils, wherein
a mass ratio (L2M/LM2) of a content of the L2M to a content of the LM2 is 0.3 to 4.5, and
L, M, the L2M, and the LM2 mean as follows:
L: saturated fatty acid with 16 to 24 carbons;
M: fatty acid with 6 to 10 carbons;
L2M: triacylglycerol having two L molecules and a single M molecule bound to a single glycerol molecule; and
LM2: triacylglycerol having a single L molecule and two M molecules bound to a single glycerol molecule.

2. The oil-based food according to claim 1, wherein
a content of capric acid in a total amount of the M forming the L2M and the LM2 is equal to or greater than 20 mass%.

3. The oil-based food according to claim 1 or 2, wherein
a total content of the L2M and the LM2 in the fats and oils is 0.01 to 10 mass%.

4. The oil-based food according to any one of claims 1 to 3, wherein
a content of MMM in the fats and oils is equal to or greater than 0.01 mass% and less than 5 mass%, and
MMM means as follows:
MMM: triacylglycerol having three M molecules bound to a single glycerol molecule.

5. The oil-based food according to any one of claims 1 to 4, wherein
a content of palm-based fats and oils in the fats and oils is equal to or greater than 20 mass%.

6. The oil-based food according to any one of claims 1 to 5, wherein
the oil-based food is chocolate.

7. The oil-based food according to any one of claims 1 to 5, wherein
the oil-based food is a plastic fat-and-oil composition.

8. An inhibitor for blooming and graining used in oil-based food of claim 1, comprising:
L2M and LM2 of equal to or greater than 40 mass% in fats and oils, wherein
a mass ratio (L2M/LM2) of a content of the L2M to a content of the LM2 s 0.3 to 4.5, and
L, M, the L2M, and the LM2 mean as follows:
L: saturated fatty acid with 16 to 24 carbons;
M: fatty acid with 6 to 10 carbons;
L2M: triacylglycerol having two L molecules and a single M molecule bound to a single glycerol molecule; and
LM2: triacylglycerol having a single L molecule and two M molecules bound to a single glycerol molecule.

## Patentansprüche

1. Lebensmittel auf Ölbasis, umfassend:
L2M und LM2 in Fetten und Ölen, wobei
ein Massenverhältnis (L2M/LM2) eines Gehalts des L2M zu einem Gehalt des LM2 0,3 bis 4,5 beträgt, und
L, M, das L2M und das LM2 Folgendes bezeichnen:
L: gesättigte Fettsäure mit 16 bis 24 Kohlenstoffen;
M: Fettsäure mit 6 bis 10 Kohlenstoffen;
L2M: Triacylglycerin mit zwei L-Molekülen und einem einzelnen M-Molekül, das an ein einzelnes Glycerinmolekül gebunden ist; und
LM2: Triacylglycerin mit einem einzelnen L-Molekül und zwei M-Molekülen, die an ein einzelnes Glycerinmolekül gebunden sind.

2. Lebensmittel auf Ölbasis nach Anspruch 1, wobei
ein Gehalt an Caprinsäure in einer Gesamtmenge des M, das das L2M und das LM2 bildet, gleich oder größer als 20 Massen-% ist.

3. Lebensmittel auf Ölbasis nach Anspruch 1 oder 2, wobei
ein Gesamtgehalt des L2M und des LM2 in den Fetten und Ölen 0,01 bis 10 Massen-% beträgt.

4. Lebensmittel auf Ölbasis nach einem der Ansprüche 1 bis 3, wobei
ein Gehalt an MMM in den Fetten und Ölen gleich oder größer als 0,01 Massen-% und weniger als 5 Massen-% beträgt, und
MMM Folgendes bezeichnet:
MMM: Triacylglycerin mit drei M-Molekülen, die an ein einzelnes Glycerinmolekül gebunden sind.

5. Lebensmittel auf Ölbasis nach einem der Ansprüche 1 bis 4, wobei
ein Gehalt an Fetten und Ölen auf Palmbasis in den Fetten und Ölen gleich oder mehr als 20 Massen-% beträgt.

6. Lebensmittel auf Ölbasis nach einem der Ansprüche 1 bis 5, wobei
das Lebensmittel auf Ölbasis Schokolade ist.

7. Lebensmittel auf Ölbasis nach einem der Ansprüche 1 bis 5, wobei
das Lebensmittel auf Ölbasis eine plastische Fett- und Öl-Zusammensetzung ist.

8. Inhibitor für Reifbildung und Körnerbildung, der in Lebensmitteln auf Ölbasis nach Anspruch 1 verwendet wird, umfassend:
L2M und LM2 von gleich oder mehr als 40 Massen-% in Fetten und Ölen, wobei
ein Massenverhältnis (L2M/LM2) eines Gehalts des L2M zu einem Gehalt des LM2 0,3 bis 4,5 beträgt, und
L, M, das L2M und das LM2 Folgendes bezeichnen:
L: gesättigte Fettsäure mit 16 bis 24 Kohlenstoffen;
M: Fettsäure mit 6 bis 10 Kohlenstoffen;
L2M: Triacylglycerin mit zwei L-Molekülen und einem einzelnen M-Molekül, das an ein einzelnes Glycerinmolekül gebunden ist; und
LM2: Triacylglycerin mit einem einzelnen L-Molekül und zwei M-Molekülen, die an ein einzelnes Glycerinmolekül gebunden sind.

## Revendications

1. Aliment à base d'huile comprenant :
L2M et LM2 dans les corps gras et les huiles, dans lequel
le rapport en masse (L2M/LM2) d'une teneur en L2M à une teneur en LM2 est de 0,3 à 4,5 et
L, M, L2M et LM2 signifient ce qui suit :
L est un acide gras saturé comptant 16 à 24 atomes de carbone ;
M est un acide gras comptant 6 à 10 atomes de carbone ;
L2M est un triacylglycérol comptant deux molécules L et une seule molécule M liée à une seule molécule de glycérol ; et
LM2 est un triacylglycérol comptant une seule molécule L et deux molécules M liées à une seule molécule de glycérol.

2. Aliment à base d'huile selon la revendication 1, dans lequel
la teneur en acide caprique dans une quantité totale de M formant L2M et LM2 est supérieure ou égale à 20 % en masse.

3. Aliment à base d'huile selon la revendication 1 ou 2, dans lequel
la teneur totale en L2M et LM2 dans les corps gras et les huiles est de 0,01 à 10 % en masse.

4. Aliment à base d'huile selon l'une quelconque des revendications 1 à 3, dans lequel
la teneur en MMM dans les corps gras et les huiles est supérieure ou égale à 0,01 % en masse et inférieure à 5 % en masse et
MMM signifie ce qui suit :
MMM : triacylglycérol dont trois molécules M sont liées à une seule molécule de glycérol.

5. Aliment à base d'huile selon l'une quelconque des revendications 1 à 4, dans lequel
une teneur en corps gras et en huiles à base d'huile de palme dans les corps gras et les huiles est supérieure ou égale à 20 % en masse.

6. Aliment à base d'huile selon l'une quelconque des revendications 1 à 5,
l'aliment à base d'huile étant du chocolat.

7. Aliment à base d'huile selon l'une quelconque des revendications 1 à 5,
l'aliment à base d'huile étant une composition plastique de corps gras et d'huile.

8. Inhibiteur de voile et de grenage utilisé dans l'aliment à base d'huile de la revendication 1, comprenant :
L2M et LM2 étant supérieurs ou égaux à 40 % en masse dans les corps gras et les huiles, dans lequel
un rapport en masse (L2M/LM2) d'une teneur en L2M à une teneur en LM2 est de 0,3 à 4,5 et
L, M, L2M et LM2 signifient ce qui suit :
L est un acide gras saturé comptant 16 à 24 atomes de carbone ;
M est un acide gras comptant 6 à 10 atomes de carbone ;
L2M est un triacylglycérol comptant deux molécules L et une seule molécule M liée à une seule molécule de glycérol ; et
LM2 est un triacylglycérol comptant une seule molécule L et deux molécules M liées à une seule molécule de glycérol.
